# FASCICULE DE BREVET EUROPEEN

(11) **EP 1 999 245 B1**
(45) Date de publication et mention de la délivrance du brevet: **09.03.2011**
(21) Numéro de dépôt: 07727213.6
(22) Date de dépôt: 22.03.2007
(51) Int. Cl.: C12H 1/02, C12H 1/14, A23L 2/70, B01J 20/00, B01D 15/00

(54) **PROCÉDÉ D'EXTRACTION DE COMPOSÉS CARBONYLÉS D'UNE BOISSON PAR EXTRACTION LIQUIDE-SOLIDE AVEC UN SUPPORT INERTE FONCTIONNALISÉ**
VERFAHREN ZUR EXTRAKTION CARBONYLIERTER VERBINDUNGEN AUS EINEM GETRÄNK ÜBER FLÜSSIGKEIT-FESTSTOFF-EXTRAKTION MIT EINEM FUNKTIONALISIERTEN INERTEN TRÄGER
PROCESS FOR EXTRACTING CARBONYLATED COMPOUNDS FROM A DRINK BY LIQUID-SOLID EXTRACTION WITH A FUNCTIONALIZED INERT SUPPORT

(30) Priorité: 22.03.2006 FR 0602486
(43) Date de publication de la demande: 10.12.2008
(73) Titulaire: CENTRE NATIONAL DE LA RECHERCHE SCIENTIFIQUE (CNRS), 75016 Paris (FR)
(72) Inventeur: DELEUZE, Hervé, F-33125 Saint Magne (FR); BLASI, Mélanie, F-33140 Villenave D'ornon (FR); BARBE, Jean-Christophe, F-33640 Portets (FR); DUBOURDIEU, Denis, F-33410 Beguey (FR); MAILLARD, Bernard, Jean, F-33600 Pessac (FR)
(74) Mandataire: Warcoin, Jacques
(86) Numéro de dépôt international: PCT/EP2007/052737
(87) Numéro de publication internationale: WO 2007/107603

(56) Documents cités:
- EP-A- 0 025 163
- DE-C1- 19 724 488
- FR-A1- 2 851 250

## Description

La présente invention concerne un procédé d'extraction de composés carbonylés d'une boisson par extraction liquide-solide avec un support inerte fonctionnalisé contenant des groupes fonctionnels nucléophiles azotés, tels que la phénylsulfonylhydrazine ou la O-benzylhydroxylamine. Avantageusement selon la présente invention, la boisson est du vin ou du jus de fruits. Le procédé selon la présente invention est avantageusement appliqué à la diminution du pouvoir de combinaison du dioxyde de soufre d'une boisson telle que le vin.

Le dioxyde de soufre est un additif universellement utilisé en oenologie, conjuguant à la fois des actions anti-oxydantes et antimicrobiennes.

Le dioxyde de soufre est notamment ajouté lors de l'étape de « mutage » de vins, tels que les vins blancs liquoreux. Cette opération est destinée à stopper la fermentation. Lorsque l'on ajoute du SO₂ au vin, il s'établit un équilibre entre les différentes formes de ce composé. Une partie réagit avec les composés carbonylés du vin pour donner des combinaisons bisulfitiques, elle correspond au SO₂ combiné. L'autre partie correspond au SO₂ libre. Les composés ou dérivés carbonylés présents dans les vins, tels que les vins blancs liquoreux, sont notamment issus du métabolisme des levures fermentaires.

Pour assurer une conservation des vins dans de bonnes conditions, il est nécessaire de maintenir une teneur minimale en SO₂ libre dans le vin pour assurer sa stabilité. Il est également indispensable de rester dans les limites légales des teneurs en SO₂ total qui, elles, sont réglementées, et dont les hygiénistes réclament - et généralement obtiennent - de manière récurrente une diminution en argumentant de la toxicité réelle de ce composé.

Les constantes des équilibres acido-basiques de l'acide sulfureux sont telles qu'au pH du vin, l'essentiel du SO₂ libre est présent sous forme hydrogénosulfite HSO₃⁻. La forme SO₂ actif (H₂SO₃) est présente à des teneurs de l'ordre de 1% du SO₂ libre, alors que la forme sulfite SO₃²⁻ est négligeable.

Dans le cadre de l'élaboration des vins présentant des sucres résiduels, il est nécessaire d'avoir, pour une bonne stabilité du produit, 1 mg/L de SO₂ actif, ce qui correspond à quelques dizaines de mg/L de SO₂ libre et quelques centaines de mg/L de SO₂ total, car une quantité importante de dioxyde de soufre se combine aux dérivés carbonylés et devient inactive vis-à-vis des levures. Dans les cas les moins favorables, la dose maximale autorisée de 400 mg/L de dioxyde de soufre (Règlement CE 1493/99) ne permet pas, à elle seule, d'éviter tout phénomène fermentaire indésirable, se traduisant par une large dépréciation du vin. Dans certains pays, les quantités minimales de dioxyde de soufre total autorisées sont même inférieures (350 mg/L au Japon, 300 mg/L à Singapour), et entravent largement la commercialisation de ces vins.

Divers procédés, tels que des procédés mécaniques ou physico-chimiques, ont déjà été développés afin de diminuer la quantité de dioxyde de soufre total ajouté au vin. Ainsi, des procédés utilisant la microfiltration tangentielle ou des résines échangeuses d'ions anioniques ou cationiques, ont été mis en oeuvre. Mais, la plupart des techniques utilisées jusqu'à présent se sont souvent révélées inefficaces pour éliminer les sulfites, ou ont entraîné une altération du vin.

Il existait ainsi un besoin de mettre au point un nouveau procédé permettant de diminuer le pouvoir de combinaison des vins ou autres boissons telles que les jus de fruits, et donc de diminuer la quantité de SO₂ total nécessaire tout en conservant un taux de SO₂ libre suffisant.

La présente invention vient combler ce besoin. La Demanderesse a ainsi découvert un procédé d'extraction permettant de diminuer les quantités de dérivés carbonylés combinant le dioxyde de soufre (en particulier : éthanal, acide pyruvique, acide 2-oxoglutarique et 5-oxofructose), sans modifier les qualités organoleptiques des boissons traitées telles que le vin. Le procédé selon la présente invention permet ainsi de réaliser une extraction sélective des composés combinant le SO₂, basé sur la formation de liaisons covalentes.

L'extraction des dérivés carbonylés présents dans les boissons, telles que les vins ou jus de fruits, qui sont susceptibles de se combiner avec le dioxyde de soufre, est réalisée selon la présente invention par extraction liquide-solide à l'aide d'un support solide fonctionnalisé, sur lequel sont greffés des groupes fonctionnels nucléophiles extracteurs, ledit support étant insoluble dans lesdites boissons à purifier.

La solution (boisson) est mise en présence des fonctions extractives, greffées sur le support insoluble, avantageusement de taille millimétrique, de manière à ce que lesdites fonctions réagissent spécifiquement avec les constituants à extraire.

Après un certain temps de mise en présence, le support, portant les fonctions extractives greffées et les constituants à extraire liés chimiquement aux fonctions extractives, est enlevé du milieu par simple filtration/décantation. La solution (boisson) est ainsi purifiée des constituants à extraire, sans altération des ses propriétés initiales et sans ajout de constituant supplémentaire autre que ceux présents initialement.

L'élimination d'une partie des dérivés carbonylés conduit ainsi à une diminution significative du pouvoir de combinaison des vins, et donc de la quantité de SO₂ total nécessaire, tout en conservant un taux de SO₂ libre suffisant. Elle facilite ainsi la stabilisation des vins. Cette diminution de la quantité de SO₂ total permet de se plier aux normes actuelles et permet également d'anticiper de nouvelles réglementations (anticipation sur les réductions des teneurs maximales autorisées en SO₂ total), et de se libérer des entraves concernant certains marchés mentionnés précédemment.

Par ailleurs, le procédé selon la présente invention respecte certaines contraintes liées à la nature des boissons à traiter, et respecte en particulier les conditions d'utilisation qui protègent la qualité des vins :
- extraction à température ambiante,
- aucun ajout de catalyseur, ou autre espèce soluble non éliminée en fin de processus,
- pas de libération dans le milieu de produits autres que ceux présents initialement dans le vin.

La Demanderesse a également découvert de manière surprenante que l'extraction liquide-solide des dérivés carbonylés majoritairement responsables des combinaisons bisulfitiques pouvait être mise en oeuvre à n'importe quel moment de la vinification, en particulier après la fin de la vinification, ce qui simplifie son application. Le procédé d'extraction selon la présente invention peut ainsi être mis en oeuvre avant ou après sulfitage.

En outre, le procédé selon la présente invention permet de diminuer les quantités de 5-oxofructose dans le vin. Or, les teneurs en 5-oxofructose des baies atteintes par la pourriture noble ne sont en général pas maîtrisables ; au moment des vendanges, même les tris les plus rigoureux s'avèrent souvent insuffisants. Jusqu'à présent, aucun traitement ne permettait de diminuer les teneurs en ce composé qui, de plus, n'est pas affecté par la fermentation alcoolique. Il n'existait donc à ce jour aucune méthode permettant de limiter le dioxyde de soufre combiné au 5-oxofructose dans les vins ou autres boissons telles que les jus de fruits.

La présente invention a ainsi pour objet un procédé d'extraction de composés carbonylés d'une boisson par extraction liquide-solide avec un support inerte fonctionnalisé contenant des groupes fonctionnels extracteurs nucléophiles azotés.

Avantageusement selon la présente invention, la boisson est du vin ou du jus de fruits. De la même manière que les vins, les jus de fruits sont également typiquement conservés par addition de dioxyde de soufre, et possèdent des dérivés carbonylés qui le piègent inutilement. Le procédé selon la présente invention permet ainsi d'extraire efficacement ces dérivés carbonylés sans altérer les jus de fruits et sans modifier leurs qualités organoleptiques.

Typiquement, les composés carbonylés à extraire selon l'invention sont des composés présents dans les vins ou les jus de fruits, en particulier l'éthanal, l'acide pyruvique, l'acide 2-oxoglutarique, le 5-oxofructose, et leurs mélanges.

L'extraction des composés carbonylés est réalisée en plaçant le support fonctionnalisé dans la boisson telle que le vin. Le milieu réactionnel (boisson) peut être agité ou laissé immobile. Les résultats de ces deux types d'extractions (avec ou sans agitation) sont très proches, les extractions sans agitation étant légèrement plus lentes. L'extraction est avantageusement réalisée à température ambiante. Après réaction, le support est ôté du milieu par simple filtration ou décantation.

La réaction chimique mise en oeuvre pour purifier les boissons et extraire les composés carbonylés est une attaque nucléophile sur lesdits composés carbonylés, les fonctions attaquées étant de type aldéhyde ou cétone. Il s'agit en particulier d'une réaction d'addition ou d'une réaction d'addition suivie d'une élimination d'eau. Les fonctions extractives sont des composés azotés nucléophiles. Ces fonctions extractives sont ainsi susceptibles de réagir spécifiquement avec les dérivés carbonylés présents dans les boissons telles que le vin, dans les conditions d'utilisation spécifiques précisées ci-dessus pour ce type de boisson. Une part du dioxyde de soufre est également extraite de la boisson avec la fonction extractive, vraisemblablement par le biais d'une réaction acide-base.

Selon une caractéristique particulière de la présente invention, les groupes fonctionnels extracteurs nucléophiles azotés greffés sur le support sont choisis dans le groupe constitué par les hydroxylamines de type RONH₂ où R est un groupe alkyle ou aryle, en particulier un groupe alkyle en C₁ à C₁₅ ; les dérivés des hydrazines, avantageusement les hydrazines de formule RNHNH₂ où R est un groupe alkyte ou aryle, en particulier un groupe alkyle en C₁ à C₁₅, les sulfonylhydrazines de formule RSO₂NHNH₂ où R est un groupe alkyle ou aryle, en particulier un groupe alkyle en C₁ à C₁₅, les semicarbazides, et la 2,4-dinitrophénylhydrazine ; et les diamines où les atomes d'azote sont séparés par un groupe éthylène et sont substitués par des groupes identiques ou différents.

Dans un mode de réalisation particulier selon la présente invention, les groupes fonctionnels nucléophiles azotés greffés sur le support sont des hydroxylamines de formule RONH₂, dans laquelle R est un groupe benzyle ou un groupe alkyle en C₁ à C₁₅. Lorsque R est un groupe alkyle, il peut contenir plus de 15 atomes de carbone, devenant par exemple assimilable à une chaîne polymère, si le groupe fonctionnel se trouve en bout de chaîne sur le support. Par ailleurs, lorsque R est un groupe alkyle, il peut contenir dans certains cas un hétéroatome, du type oxygène ou azote, incorporé au milieu de la chaîne alkyle.

Dans un autre mode de réalisation particulier selon la présente invention, les groupes fonctionnels nucléophiles azotés greffés sur le support sont des sulfonylhydrazines de formule RSO₂NHNH₂, dans laquelle R est un groupe phényle ou un groupe alkyle en C₁ à C₁₅. Lorsque R est un groupe alkyle, il peut contenir plus de 15 atomes de carbone, devenant par exemple assimilable à une chaîne polymère, si le groupe fonctionnel se trouve en bout de chaîne sur le support. Par ailleurs, lorsque R est un groupe alkyle, il peut contenir dans certains cas un hétéroatome, du type oxygène ou azote, incorporé au milieu de la chaîne alkyle.

De manière particulièrement avantageuse selon la présente invention, les groupes fonctionnels extracteurs nucléophiles azotés sont choisis parmi la phénylsulfonylhydrazine et la O-benzylhydroxylamine.

Dans un exemple de réalisation particulier selon la présente invention, le support est fonctionnalisé avec la fonction phénylsulfonylhydrazine, et le radical phényle de la phénylsulfonylhydrazine est éventuellement substitué, avantageusement en ortho, méta et/ou para, par des substituants tels que Me, NO₂, OH, Pr, i-Bu, NH₂, COR, et/ou un halogène.

Dans un autre mode de réalisation particulier selon la présente invention, les groupes fonctionnels nucléophiles azotés greffés sur le support sont des diamines où les atomes d'azote sont séparés par un groupe éthylène et sont substitués par des groupes identiques ou différents du type H, OH, Me ou groupe carboné. Par exemple, les diamines peuvent être des polyéthylèneimines, une résine amino-époxy formée à partir d'épichlorohydrine et d'éthylènediamine, ou la N,N'-diméthyl-1,2-éthanediamine.

Le principe de l'extraction conformément à l'invention est le déplacement d'équilibres. Les équilibres considérés sont rassemblés sur le schéma 1 suivant. Sur ce schéma 1, S représente le support, et le groupe fonctionnel utilisé pour extraire les dérivés carbonylés, qui est greffé sur ledit support, est la phénylsulfonylhydrazine.

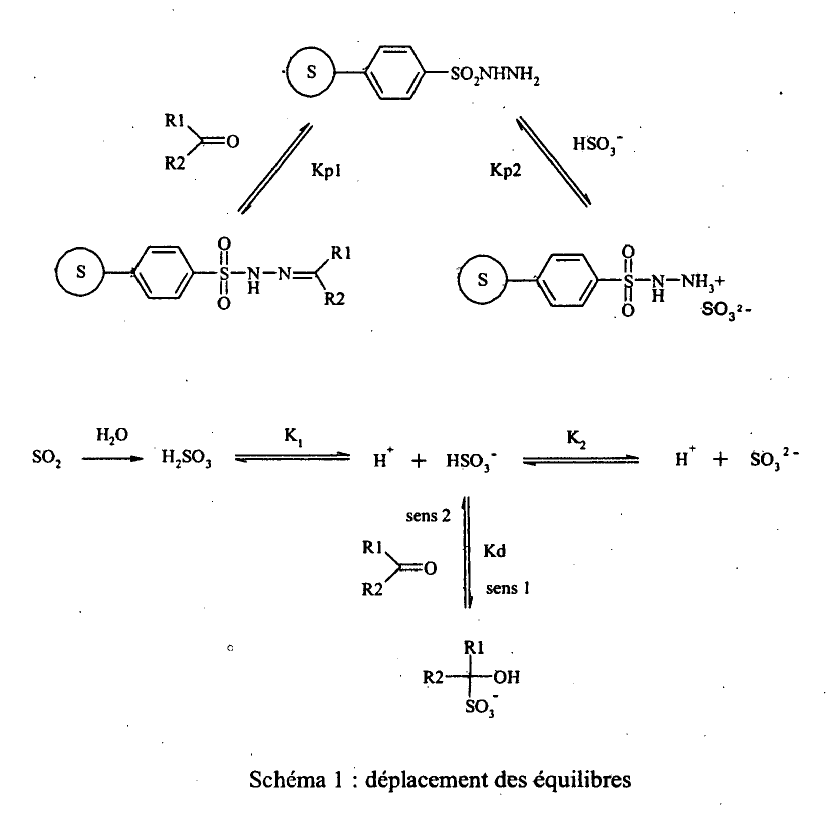

Lorsque l'on ajoute du dioxyde de soufre dans une solution hydroalcoolique telle que le vin, celui-ci réagit aussitôt avec une molécule d'eau pour former HiSO₃. Cet acide faible peut se dissocier pour donner HSO₃⁻ et SO₃²⁻. Au pH des vins (pH de l'ordre de 3,5) et des jus de fruits, c'est la forme HSO₃⁻ qui est majoritaire. En présence de dérivés carbonylés, elle réagit pour former une combinaison bisulfitique (sens 1). L'ensemble des combinaisons bisulfitiques correspondent au dioxyde de soufre combiné. Les constantes de dissociation de chaque combinaison bisulfitique traduisent l'affinité pour le SO₂ des composés carbonylés correspondants. Dans le vin ou dans les jus de fruits, coexistent des composés carbonylés présents sous forme de combinaison bisulfitique et sous forme libre. Le dioxyde de soufre est lui sous forme de combinaison bisulfitique et sous forme d'ions hydrogénosulfite, voir même sous forme moléculaire (très faible pourcentage).

Lors du traitement (extraction), les dérivés carbonylés libres réagissent avec la phénylsulfonylhydrazine greffée sur le support. Pour rétablir le rapport entre composés libres et composés combinés, les combinaisons bisulfitiques sont rompues (sens 2) et libèrent le HSO₃⁻ et les dérivés carbonylés. Ainsi, les dérivés carbonylés sont progressivement piégés par le support. Le HSO₃⁻ libéré dans le milieu est alors piégé par le support, et donc éliminé du milieu plus ou moins partiellement.

Selon une caractéristique particulière de la présente invention, le support est un support insoluble dans la boisson, est un support organique ou inorganique, et est avantageusement de taille millimétrique. Typiquement, la taille du support est comprise entre 0,03 et 1,2 mm. Le support utilisé doit être inerte chimiquement vis-à-vis du milieu réactionnel (boisson) dans lequel il est plongé. Il doit également pouvoir être greffé avec la fonction extractive retenue.

Le support peut être de type organique, poreux, et formé d'un réseau tridimensionnel (le rendant insoluble). Il peut être de type gel, macroporeux, microporeux ou hyper-réticulé, typiquement obtenu par réticulation directe ou par post-réticulation.

Le support peut également être de type inorganique, tridimensionnel (hydrogel, xérogel ou aérogel de silice, support mésoporeux ou microporeux, qui conduira à un support hybride de classe I ou de classe II).

Avantageusement selon la présente invention, le support est à base de polymère, de silice, d'alumine, ou d'argile. De manière encore plus avantageuse selon la présente invention, le support est un support polymérique à base de monomères vinyliques et/ou styréniques. On utilise de préférence un copolymère à base de monomères vinyliques et styréniques.

Le support est ainsi avantageusement élaboré à partir de mélanges de monomères de type vinyliques (divinylbenzène, trivinylbenzène, 1,8-bis(éthènylphenyl)-2,7-dioxooctane et toute la famille construite à partir des polytétrahydrofurannes, poly(éthylène glycol) divinyléther, éthylène glycol diméthacrylate, butanediol diméthacrylate, biphenol A diméthacrylate, hexanediol diméthacrylate) et de types styréniques (styrène, méthylstyrène, chlorométhylstyrene, chlorure de p-sulfonyle-styrène, O-(p-vinyl-benzyl)acétoxime, O-(p-vinyl-benzyl)oxy)amine, acide p-sulfonique styrène, p-vinylphénol, acide p-vinylbenzoique, p-vinylbenzaldéhyde), dans des proportions variables suivant les propriétés du matériau que l'on veut obtenir.

Dans un exemple de réalisation particulier, le support est à base de copolymère styrène-divinylbenzène.

Selon une caractéristique particulière de la présente invention, le taux de fonctionnalisation du support est compris entre 0,75 et 4,5 mmol/g, avantageusement entre 2,5 et 4 mmol/g.

Dans un mode de réalisation particulier selon la présente invention, la quantité de support est comprise entre 1 et 15 g par litre de boisson, avantageusement entre 1 et 5 g par litre de boisson.

Dans un mode de réalisation particulier de la présente invention, le support utilisé est un support polymère. Dans le cas du support polymère, deux voies de fonctionnalisations sont possibles. La première voie est décrite sur le schéma 2 suivant. Sur ce schéma 2, PS représente le support polymère, et le groupe fonctionnel extracteur qui est greffé sur ledit support est la phénylsulfonylhydrazine.

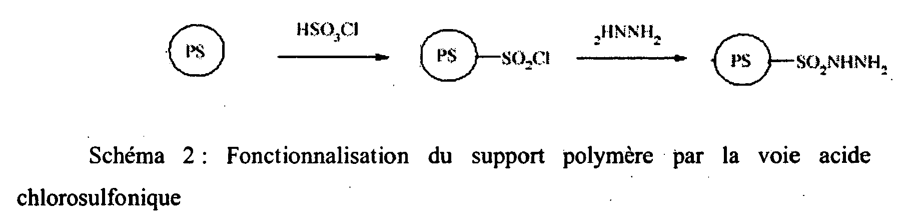

Dans un exemple de réalisation particulier selon la présente invention, un support de type polystyrène réticulé avec du divinylbenzène, peut être fonctionnalisé en deux étapes en utilisant d'abord de l'acide chlorosulfonique (3 mL par gramme de support), puis en réalisant une hydrazination (4 équivalents).

Une seconde voie de fonctionnalisation plus douce est possible pour les supports préfonctionnalisés avec la fonction acide sulfonique. Le support est alors traité avec du chlorure de thionyle (de 2 à 5 équivalents), puis subit une hydrazination (4 équivalents). C'est cette seconde voie qui est préférentiellement utilisée dans le cadre de la présente invention pour fonctionnaliser les supports polymères utilisés lors des extractions.

Dans un autre mode de réalisation particulier de la présente invention, le support utilisé est un support de silice. Dans le cas du support de silice, ce support peut être fonctionnalisé comme décrit sur le schéma 3 suivant. Sur ce schéma 3, le groupe fonctionnel extracteur qui est greffé sur ledit support est la phénylsulfonylhydrazine.

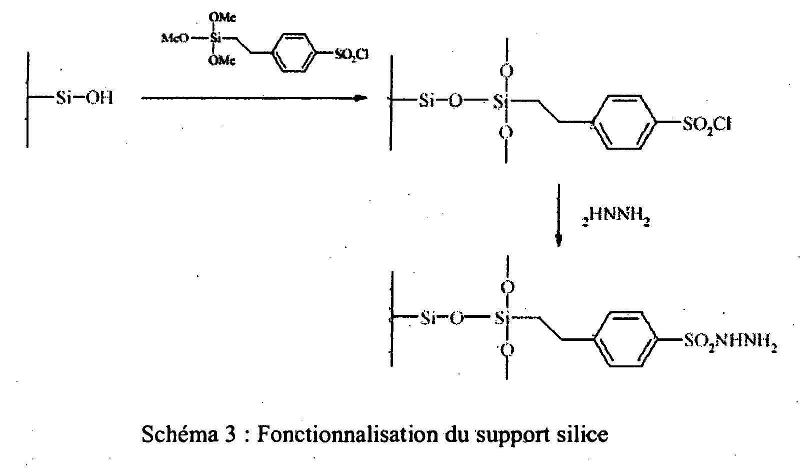

La présente invention a également pour objet un procédé de diminution du pouvoir de combinaison du dioxyde de soufre d'une boisson, comprenant les étapes successives suivantes :
- l'extraction de composés carbonylés de ladite boisson selon le procédé d'extraction tel que mentionné ci-dessus, et
- le retrait du support par filtration ou décantation.

Après extraction des composés carbonylés de la boisson par le support fonctionnalisé, le support est ainsi ôté du milieu par simple filtration ou décantation.

L'extraction des composés carbonylés est typiquement réalisée à température ambiante, avantageusement sans agitation pour ne pas agiter les boissons telles que le vin.

Selon une caractéristique particulière de la présente invention, l'extraction est réalisée pendant une durée comprise entre 1 jour et 52 semaines, avantageusement entre 1 et 8 semaines.

Avantageusement, le procédé selon la présente invention est mis en oeuvre avant ou après sulfitage. De manière particulièrement avantageuse, le procédé selon la présente invention peut être réalisé après ajout de SO₂, par exemple en fin de processus de vinification.

Les exemples suivants sont donnés à titre non limitatif et illustrent la présente invention.

### Exemple 1 de réalisation de l'invention :

La phénylsulfonylhydrazine a été utilisée comme fonction extractive des dérivés carbonylés du vin.

L'efficacité de cette fonction extractive a été testée sur des solutions modèles : tout d'abord, en milieu homogène, avant et après addition de dioxyde de soufre dans la solution.

Puis, après greffage des fonctions extractives sur des supports, les tests ont été effectués en milieu hétérogène, avant et après addition de dioxyde de soufre dans la solution. Des supports de type polymère (copolymère styrène-divinylbenzène) et silice ont été utilisés pour cette étude.

L'extraction des composés carbonylés du type éthanal, acide pyruvique, acide 2-oxoglutarique, et 5-oxofructose par la fonction extractive phénylsulfonylhydrazine a été particulièrement performante, tant en milieu homogène qu'en milieu hétérogène, avant ou après addition de dioxyde de soufre dans le milieu réactionnel.

Les extractions ont ensuite été réalisées en plongeant le support fonctionnalisé dans du vin. Le mélange peut être agité ou laissé immobile. Les résultats des deux types d'extractions sont très proches, les extractions sans agitation étant légèrement plus lentes. Les extractions ont été réalisées à température ambiante. Après réaction, le support est ôté du milieu par filtration.

Les taux de fonctionnalisation des supports sont déterminés par des méthodes d'analyses classiques appropriées. Les quantités de dérivés carbonylés présents dans le vin et les teneurs en dioxyde de soufre sont mesurées par des méthodes de dosage classiques.

### Bilan des extractions :

Les extractions ont été réalisées sur des vins de Sauternes de 1999 et de 2000 présentant un taux de SO₂ libre connu précisément et de l'ordre de 50 mg/L pour un total en SO₂ de l'ordre de 400 mg/L. Les extractions ont été faites en utilisant des fractions d'environ 100 mL de vin qui ont reçu l'addition de plusieurs quantités de supports fonctionnalisés (2, 6 et 10 équivalents de fonctions par rapport aux dérivés carbonylés présents). Les flacons sont agités à l'aide d'un agitateur rotatif par culbutage tournant à 9 tours par minute ou laissés sans agitation. Un flacon témoin permet de tenir compte de l'évolution naturelle du vin pendant l'extraction.

Les résultats ont montré que l'agitation n'avait pas d'influence sur la qualité des extractions. Les mesures ont été faites chaque semaine pendant quatre semaines. Elles montrent une faible évolution des extractions en fonction du temps. La quantité de fonctions supportées présentes dans le milieu a une influence sur le niveau d'extraction. Une mise en contact du vin et des supports fonctionnalisés pendant quatre semaines se traduit par une diminution des teneurs en composés carbonylés: l'éthanal décroît de 145 à 60 mg/L, l'acide pyruvique de 125 à 23 mg/L, l'acide 2-oxoglutarique de 90 à 5 mg/L et le 5-oxofructose de 126 à 52 mg/L. Dans le même temps, logiquement, le pouvoir de combinaison du vin décroît nettement puisque les teneurs en SO₂ libre croissent (de 25 à 56 mg/L), et que les teneurs en SO₂ combiné diminuent (de 296 à 192 mg/L).

### Analyse des contaminants :

L'utilisation de méthodes analytiques sensibles (CPG/SM) n'a pas permis de mettre en évidence l'apparition de nouveaux composés dans le milieu après extraction et filtration des supports.

### Exemple 2 de réalisation de l'invention :

### Utilisation d'un support polymère :

Les extractions ont été réalisées en utilisant un support polymère fonctionnalisé à 2,6 mmol/g par la phénylsulfonylhydrazine. Ce support a été obtenu par traitement d'une résine DOWEX ® 50WX2-100 par 3 équivalents chlorure de thionyle, suivi par une hydrazination. La fraction de 80 mL d'un vin de Sauternes 2000 est traitée avec 0,354 g de support. L'extraction s'est déroulée sur quatre semaines sans agitation. Après filtration, les mesures ont été réalisées par dosages enzymatiques (pour les dérivés carbonylés), et en utilisant la méthode de Ripper (pour le dioxyde de soufre). Le flacon témoin a été soumis aux mêmes conditions de température. Les résultats obtenus sont reportés dans le tableau 1 suivant.

**Tableau 1 : Résultats des extractions après quatre semaines sans agitation en utilisant un support polymère**

| Composé analysé | Concentration du composé dans le témoin (mg/L) | Concentration du composé dans l'échantillon après traitement (mg/L) |
|---|---|---|
| Ethanal | 149 | 60 |
| Acide pyruvique | 125 | 23 |
| Acide 2-oxoglutarique | 93 | 0 |
| 5-oxofructose | 126 | 52 |
| SO₂ libre | 24 | 56 |
| SO₂ combiné | 296 | 192 |

Les résultats montrent que chaque dérivé carbonylé est extrait du vin à 60 % au minimum. Ceci conduit à une diminution du pouvoir de combinaison du vin. Les résultats montrent que le SO₂ combiné a diminué de 100 mg/L, et que SO₂ libre a augmenté de 32 mg/l dans le même temps.

### Utilisation d'un support de silice :

Les extractions ont été réalisées en utilisant un support de silice fonctionnalisé à 0,8 mmol/g par la phénylsulfonylhydrazine. L'extraction a été faite sur une fraction de 100 mL d'un vin de Sauternes 1999 en utilisant 3,3 g de support. Les mesures ont été effectuées après quatre semaines de mise en contact. Après filtration, les mesures ont été réalisées par dosages enzymatiques (pour les dérivés carbonylés), et en utilisant la méthode de Ripper (pour le dioxyde de soufre). Le flacon témoin a été soumis aux mêmes conditions de température. Les résultats obtenus sont reportés dans le tableau 2 suivant.

**Tableau 2 : Résultats des extractions après quatre semaines sans agitation en utilisant un support silice**

| Composé analysé | Concentration du composé dans le témoin (mg/L) | Concentration du composé dans l'échantillon après traitement (mg/L) |
|---|---|---|
| Éthanal | 118 | 67 |
| Acide pyruvique | 90 | 16 |
| Acide 2-oxoglutarique | 38 | 0 |
| 5-oxofrucrose | 108 | 15 |
| SO₂ libre | 20 | 26 |
| SO₂ combiné | 294 | 140 |

Les résultats montrent que les dérivés carbonylés sont extraits du vin à plus de 50 %. Le pouvoir de combinaison du vin a également diminué dans ce cas. Le SO₂ combiné a diminué de 150 mg/L, et le SO₂ libre a augmenté (de 20 à 26 mg/L).

## Revendications

1. Procédé d'extraction de composés carbonylés d'une boisson par extraction liquide-solide avec un support inerte fonctionnalisé contenant des groupes fonctionnels nucléophiles azotés.

2. Procédé d'extraction selon la revendication 1, **caractérisé en ce que** la boisson est du vin ou du jus de fruits.

3. Procédé d'extraction selon la revendication 2, **caractérisé en ce que** les composés carbonylés sont des composés présents dans les vins ou les jus de fruits, en particulier l'éthanal, l'acide pyruvique, l'acide 2-oxoglutarique, le 5-oxofructose, et leurs mélanges.

4. Procédé d'extraction selon l'une quelconque des revendications 1 à 3, **caractérisé en ce que** les groupes fonctionnels nucléophiles azotés sont choisis dans le groupe constitué par les hydroxylamines de type RONH₂ où R est un groupe alkyle ou aryle ; les dérivés des hydrazines, avantageusement les hydrazines de formule RNHNH₂ où R est un groupe alkyle ou aryle, les sulfonylhydrazines de formule RSO₂NHNH₂ où R est un groupe alkyle ou aryle, les semicarbazides, et la 2,4-dinitrophénylhydrazine ; et les diamines où les atomes d'azote sont séparés par un groupe éthylène et sont substitués par des groupes identiques ou différents.

5. Procédé d'extraction selon l'une quelconque des revendications 1 à 4, **caractérisé en ce que** les groupes fonctionnels nucléophiles azotés sont choisis parmi la phénylsulfonylhydrazine et la O-benzylhydroxylamine.

6. Procédé d'extraction selon l'une quelconque des revendications précédentes, **caractérisé en ce que** le support est un support insoluble dans la boisson, et est organique ou inorganique, avantageusement de taille millimétrique.

7. Procédé d'extraction selon la revendication 6, **caractérisé en ce que** le support est à base de polymère, de silice, d'alumine, ou d'argile.

8. Procédé d'extraction selon la revendication 7, **caractérisé en ce que** le support est un support polymérique à base de monomères vinyliques et/ou styréniques, avantageusement un support à base de copolymère styrène-divinylbenzène.

9. Procédé d'extraction selon l'une quelconque des revendications précédentes, **caractérisé en ce que** le taux de fonctionnalisation du support est compris entre 0,75 et 4,5 mmol/g.

10. Procédé d'extraction selon l'une quelconque des revendications précédentes, **caractérisé en ce que** la quantité de support est comprise entre 1 et 15 g par litre de boisson.

11. Procédé de diminution du pouvoir de combinaison du dioxyde de soufre d'une boisson, comprenant les étapes successives suivante :
- l'extraction de composés carbonylés de ladite boisson selon le procédé tel que défini à l'une quelconque des revendications 1 à 10, et
- le retrait du support par filtration ou décantation.

12. Procédé selon la revendication 11, **caractérisé en ce que** l'extraction des composés carbonylés est réalisée à température ambiante, avantageusement sans agitation.

13. Procédé selon la revendication 11 ou 12, **caractérisé en ce que** l'extraction est réalisée pendant une durée comprise entre 1 jour et 52 semaines.

14. Procédé selon l'une quelconque des revendications 11 à 13, **caractérisé en ce que** le procédé est mis en oeuvre avant ou après sulfitage.

## Claims

1. Process for extracting carbonyl compounds from a beverage by liquid-solid extraction using an inert functionalized support containing functional nitrogenous nucleophilic groups.

2. Extraction process according to claim 1, **characterized in that** the beverage is wine or fruit juice.

3. Extraction process according to claim 2, **characterized in that** the carbonyl compounds are compounds present in wine or fruit juice, in particular ethanal, pyruvic acid, 2-oxoglutaric acid, 5-oxofructose, and their mixtures.

4. Extraction process according to any of claims 1 to 3, **characterized in that** the functional nitrogenous nucleophilic groups are chosen from the group consisting of RONH₂ hydroxylamines in which R is an alkyl or aryl group; derivatives of hydrazines, advantageously hydrazines of formula RNHNH₂ in which R is an alkyl or aryl group, sulfonylhydrazines of formula RSO₂NHNH₂ in which R is an alkyl or aryl group, semicarbazides and 2,4-dinitrophenylhydrazine; and diamines in which the nitrogen atoms are separated by an ethylene group and are substituted by identical or different groups.

5. Extraction process according to any of claims 1 to 4, **characterized in that** the functional nitrogenous nucleophilic groups are chosen from among phenylsulfonylhydrazine and O-benzylhydroxylamine.

6. Extraction process according to any of the preceding claims, **characterized in that** the support is a support insoluble in the beverage, is organic or inorganic, and is advantageously of millimeter size.

7. Extraction process according to claim 6, **characterized in that** the support is polymer-, silica-, alumina- or clay-based.

8. Extraction process according to claim 7, **characterized in that** the support is a polymeric support containing vinyl and/or styrene monomers, advantageously a support containing a styrenedivinylbenzene copolymer.

9. Extraction process according to any of the preceding claims, **characterized in that** the functionalization rate of the support lies between 0.75 and 4.5 mmol/g.

10. Extraction process according to any of the preceding claims, **characterized in that** the quantity of support ranges from 1 to 15 g per liter of beverage.

11. Process to reduce the sulfur dioxide binding power of a beverage, comprising the following successive steps:
- extraction of carbonyl compounds from said beverage following the process such as defined in any of claims 1 to 10, and
- removal of the support by filtration or decanting.

12. Process according to claim 11, **characterized in that** extraction of carbonyl compounds is performed at ambient temperature, advantageously without agitation.

13. Process according to claim 11 or 12, **characterized in that** extraction is conducted for a time of between 1 day and 52 weeks.

14. Process according to any of claims 11 to 13, **characterized in that** the process is implemented before or after sulfiting.

## Patentansprüche

1. Verfahren zur Extraktion carbonylierter Verbindungen aus einem Getränk durch Flüssig-Fest-Extraktion mit einem funktionalisierten inerten Träger, welcher nukleophile funktionelle Stickstoffgruppen enthält.

2. Extraktionsverfahren gemäß Anspruch 1, **dadurch gekennzeichnet, dass** das Getränk Wein oder Fruchtsaft ist.

3. Extraktionsverfahren gemäß Anspruch 2, **dadurch gekennzeichnet, dass** es sich bei den carbonylierten Verbindungen um Verbindungen handelt, die in den Weinen oder Fruchtsäften vorliegen, insbesondere um Acetaldehyd, Brenztraubensäure, 2-Oxoglutarsäure, 5-Oxofruktose und deren Mischungen.

4. Extraktionsverfahren gemäß irgendeinem der Ansprüche 1 bis 3, **dadurch gekennzeichnet, dass** die nukleophilen funktionellen Stickstoffgruppen ausgewählt sind aus der Gruppe bestehend aus Hydroxylaminen des Typs RONH₂, worin R eine Alkyl- oder Arylgruppe ist; Hydrazinderivaten, bevorzugt Hydrazinen der Formel RNHNH₂, worin R eine Alkyl- oder Arylgruppe ist, Sulfonylhydrazinen der Formel RSO₂NHNH₂, worin R eine Alkyl- oder Arylgruppe ist, Semicarbaziden und 2,4-Dinitrophenylhydrazin; und Diaminen, in denen die Stickstoffatome durch eine Ethylengruppe getrennt sind und die mit identischen oder unterschiedlichen Gruppen substituiert sind.

5. Extraktionsverfahren gemäß irgendeinem der Ansprüche 1 bis 4, **dadurch gekennzeichnet, dass** die nukleophilen funktionellen Stickstoffgruppen aus Phenylsulfonylhydrazin und O-Benzylhydroxylamin ausgewählt sind.

6. Extraktionsverfahren gemäß irgendeinem der vorhergehenden Ansprüche, **dadurch gekennzeichnet, dass** der Träger ein in dem Getränk unlöslicher, organischer oder anorganischer, bevorzugt im Millimetergrößenbereich liegender Träger ist.

7. Extraktionsverfahren gemäß Anspruch 6, **dadurch gekennzeichnet, dass** der Träger ein Träger auf Polymerbasis, Siliziumdioxid-, Aluminiumoxid- oder Tonbasis ist.

8. Extraktionsverfahren gemäß Anspruch 7, **dadurch gekennzeichnet, dass** der Träger ein polymerer Träger auf Vinylmonomer- und/oder Styrolmonomer-Basis, bevorzugt ein Träger auf Styrol-Divinylbenzol-Copolymer-Basis, ist.

9. Extraktionsverfahren gemäß irgendeinem der vorhergehenden Ansprüche, **dadurch gekennzeichnet, dass** der Funktionalisierungsgrad des Trägers 0,75 bis 4,5 mmol/g beträgt.

10. Extraktionsverfahren gemäß irgendeinem der vorhergehenden Ansprüche, **dadurch gekennzeichnet, dass** die Trägermenge 1 bis 15 g pro Liter Getränk beträgt.

11. Verfahren zur Verminderung des Schwefeldioxidbildungsvermögens in einem Getränk, welches die folgenden Schritte umfasst:
- Extraktion von carbonylierten Verbindungen aus dem Getränk gemäß dem in irgendeinem der Ansprüche 1 bis 10 definierten Verfahren, und
- Wiedergewinnung des Trägers durch Filtration oder Dekantieren.

12. Verfahren gemäß Anspruch 11, **dadurch gekennzeichnet, dass** die Extraktion der carbonylierten Verbindungen bei Raumtemperatur, bevorzugt ohne Rühren, ausgeführt wird.

13. Verfahren gemäß Anspruch 11 oder 12, **dadurch gekennzeichnet, dass** die Extraktion über einen Zeitraum von 1 Tag bis 52 Wochen durchgeführt wird.

14. Verfahren gemäß irgendeinem der Ansprüche 11 bis 13, **dadurch gekennzeichnet, dass** das Verfahren vor oder nach einer Sulfidierung durchgeführt wird.
